(19) Europäisches Patentamt
European Patent Office
Office européen des brevets

(11) **EP 2 612 046 B1**

(12) **EUROPÄISCHE PATENTSCHRIFT**

(45) Veröffentlichungstag und Bekanntmachung des Hinweises auf die Patenterteilung:
**26.07.2017 Patentblatt 2017/30**

(51) Int Cl.:
*F16C 17/02* *(2006.01)*          *F16C 33/04* *(2006.01)*
*F16C 33/10* *(2006.01)*          *F16C 9/04* *(2006.01)*

(21) Anmeldenummer: **11749850.1**

(22) Anmeldetag: **01.09.2011**

(86) Internationale Anmeldenummer:
**PCT/EP2011/065093**

(87) Internationale Veröffentlichungsnummer:
**WO 2012/028682 (08.03.2012 Gazette 2012/10)**

(54) **SCHMUTZDEPOTS IN GLEITLAGERN**

DIRT REPOSITORY IN PLAIN BEARINGS

DÉPÔTS DE SALISSURES DANS DES PALIERS À GLISSEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.09.2010 DE 102010040154**

(43) Veröffentlichungstag der Anmeldung:
**10.07.2013 Patentblatt 2013/28**

(73) Patentinhaber: **Federal-Mogul Wiesbaden GmbH**
**65201 Wiesbaden (DE)**

(72) Erfinder:
• **RITTMANN, Stefan**
**67292 Kirchheimbolanden (DE)**
• **AUBELE, Thomas**
**55278 Undenheim (DE)**

• **BRESSER, Karsten**
**65347 Eltville (DE)**

(74) Vertreter: **Hoffmann Eitle**
**Patent- und Rechtsanwälte PartmbB**
**Arabellastraße 30**
**81925 München (DE)**

(56) Entgegenhaltungen:
| | |
|---|---|
| **EP-A2- 2 216 557** | **DD-A3- 258 149** |
| **DE-A1- 1 525 266** | **DE-A1- 1 525 266** |
| **DE-A1-102005 037 502** | **DE-A1-102007 046 010** |
| **DE-C- 641 264** | **GB-A- 1 144 131** |
| **JP-A- 5 044 729** | **JP-A- 5 202 936** |
| **JP-A- 61 088 023** | **JP-A- 61 088 023** |
| **JP-A- 2009 068 511** | **US-A- 3 058 791** |
| **US-A- 5 667 310** | |

EP 2 612 046 B1

**Beschreibung**

TECHNISCHES GEBIET

Die Erfindung betrifft Gleitlager mit einer mindestens ein Depot aufweisenden Depotfläche, die eine Gleitfläche und/oder eine Fläche einer Ölversorgungsnut ist, wobei das Depot eine Aussparung ist, die zur Depotfläche offen ist und eine Depotwand aufweist, die sich von der Depotfläche in Richtung zum Lagerrücken erstreckt.

STAND DER TECHNIK

Gleitflächen von Gleitlagern werden aus verschiedenen Gründen profiliert. Beispielsweise wurde in der DE 39 05 450 C2 vorgeschlagen, Gleitlager mit Nuten zu versehen, die mit weicherem Material gefüllt sind, so dass sich das härtere Material mit dem weicheren Material in der Gleitschicht abwechselt, um eine bessere Verschleißfestigkeit und Ermüdungsfestigkeit zu erzielen.

Die GB 1,128,370 A beschreibt ein schmiermittelfreies Lager, in dem in der Gleitfläche Aussparungen in der Form von Nuten oder Taschen ausgebildet sind, um Schmutzpartikel aus dem Lager herauszubefördern. Fremdkörper, die in das Lager eindringen, werden in den Aussparungen gesammelt und in der Richtung der Drehung der Welle entlang der Flanken der Aussparungen transportiert und an den Enden des Lagers aus dem Lager herausbefördert. Die GB 1 144 131 A beschreibt ein Gleitlager mit Ölzuführungskanäle, um Schmutzpartikeln aus dem Lager herauszuspülen.

Gleitlager in Verbrennungsmotoren sind einer ständigen Weiterentwicklung unterworfen. In den Verbrennungsmotoren und somit auch an den Gleitlagern treten immer höhere Belastungen auf. Gleichzeitig wird die Baugröße der Motoren verringert. Zudem werden immer dünnflüssigere Öle zur Reibungsreduzierung eingesetzt. Dies führt zu immer geringeren Schmierfilmdicken, welche den Kontakt zwischen Lager und Welle verhindern. Folglich wird das System immer empfindlicher gegenüber ungewollten Fremdeinflüssen, wie Schmutzeintrag größerer Partikel und Späne beispielsweise aus der Komponentenherstellung, was nie gänzlich vermieden werden kann.

Ferner ändert sich der Aufbau der Lagerschale. Blei, das sehr gute Gleiteigenschaften aufweist, wird durch andere Elemente ersetzt. Auch die Belastungsfähigkeit der Lager wird erhöht, was zu einer höheren Empfindlichkeit gegenüber Fremdeinflüssen führt. Höher belastbare Schichten sind in der Regel dünner und härter als herkömmliche, was eine geringere Einbettfähigkeit, d.h. die Fähigkeit harte Partikel zur Verschleißminderung in die Gleitschicht einzubetten, mit sich bringt. Durch das Ersetzen bleihaltiger Schichten verringert sich auch die Restgleitfähigkeit einer geschädigten Schicht. Dies reduziert zudem die Einbettfähigkeit mit folglich reduzierter Betriebssicherheit der Lagerstelle. Im Falle eines Fremdkörpereintrags wird somit die Lagerstelle stärker als bisher geschädigt, was bis zum Totalausfall des Tribosystems führen kann.

Fremdpartikel können unterschiedlichen Ursprungs sein und auf unterschiedliche Weise in den Ölkreislauf gelangen. Beispielsweise kann Schmutz, resultierend aus der Komponentenherstellung, wie etwa Bohrspäne, Schweiß- oder Lötreste, Restschmutz einzelner Komponenten aus der Verpackung usw. das Lager schädigen. Ferner können Verschleißpartikel beispielsweise aus Ölpumpen oder Kettenspannern oder Verbrennungsrückstände aus verklumpten und verbrannten Kohlenwasserstoffverbindungen in das Lager eindringen. Außerdem können Fremdpartikel aus Wartungsarbeiten oder Verunreinigungen im Öl beim Ölwechsel zur Beschädigung des Lagers führen.

Die Fremdkörper können um ein Vielfaches größer als das Lagerspiel sein, die daher nicht einfach aus der Lagerstelle ausgespült werden können. Sie bewegen sich in Richtung des Ölstroms zum Ende der Ölversorgungsbohrung und das Austreten des Fremdkörpers wird durch das Lager gehemmt. Somit werden die Fremdpartikel dann von der Ölversorgungsbohrung in Umfangsrichtung über die empfindliche Gleitlageoberfläche gezogen und zerstören somit das Lager durch Riefenbildung. Im Extremfall versucht der Fremdkörper das Lager im Bereich des geringsten Widerstandes, d. h. im Bereich der Freilegung (größte Spaltweite), zu verlassen und wird in Folge der Keilwirkung zwischen Welle und Freilegung von der Welle bis tief in belastete Bereiche des Lagers mitgerissen. Solche Schädigungen führen in der Regel zum Totalausfall der Lagerstelle.

Die DE 10 2005 037 502 A1 beschreibt eine Lagerschale mit einem ersten und einem zweiten Freilegungsbereich, wobei die beiden Freilegungsbereiche an der Innenfläche der beiden Lagerschalenenden ausgebildet sind. Ölnuten in den beiden Freilegungsbereichen sind in Strömungsrichtung des Schmieröls zur Mittellinie der Lagerschale geneigt ausgerichtet.

ZUSAMMENFASSUNG DER ERFINDUNG

Den obigen Problemen entgegenzuwirken, ist Hintergrund der Erfindung, und eine Aufgabe der Erfindung besteht darin, die Empfindlichkeit eines geschmierten Lagers hinsichtlich der Einflüsse von Fremdpartikeln zu verringern.

Die Aufgabe wird mit einem Gleitlager nach Anspruch 1 gelöst.

Das Gleitlager ist aus zwei Lagerschalen gebildet, die jeweils ein Depot auf der Gleitfläche und/oder in der Ölversorgungsnut aufweisen. Genauer gesagt können sich das eine oder die mehreren Depots sowohl auf der Gleitfläche als auch auf einer Oberfläche der Ölversorgungsnut, die gemeinsam als Depotfläche bezeichnet werden, befinden. Das Depot ist eine Aussparung, die zur Depotfläche offen ist. Das Depot erstreckt sich in das Lager, das heißt im Falle eines Depots der Gleitfläche in axialer Richtung zum Lagerrücken. Das Depot wird von einer oder mehreren Depotwänden begrenzt und bildet somit eine taschenförmige Aussparung oder ein Sackloch. Die Vorzugsrichtung des Depotwinkels in Richtung zum Lagerrücken ist von der Wellendrehrichtung abhängig und zwar so, dass gesammelte Fremdkörper nicht aus dem Depot herausgespült werden können. Genauer gesagt bildet die Depotwand in der Erstreckungsrichtung mit einer Bezugsrichtung einen spitzen Winkel, wobei die Bezugsrichtung parallel zur Tangente der Depotfläche am Schnittpunkt der Depotwand mit der Depotfläche genommen wird. Hierbei wird der Winkel genommen, der aus der Depotwand in der Erstreckungsrichtung und der Tangente in Richtung vom Depot weg gebildet wird. Mit anderen Worten ist zumindest eine Depotwand schräg in das Lager eingebracht und zwar so, dass bei Drehung der Welle im Lager ein in dem Depot befindlicher Fremdkörper nicht aus dem Depot herausgespült werden kann, sondern sich vielmehr darin verkeilt. Auf diese Weise werden die gefährlichen Fremdkörper in dem einen oder in den mehreren Depots fixiert, wodurch eine Beschädigung der Funktionsfläche des Lagers vermieden oder zumindest vermindert wird. Die Funktion des Lagersystems bleibt somit auch im Extremfall erhalten. Depots können auch bei Hauptlagern in der Ölversorgungsnut eines Lagers oder einer Lagerschale integriert werden, um zu verhindern, dass Fremdkörper durch den Ölstrom in die Gleitflächen des Lagers gespült werden. In diesem Fall ist die oben genauer definierte Einbringrichtung des Depots so, dass der gerichtete Ölfluss Fremdteilchen aus dem Depot nicht herausspülen kann.

Das Depot durchstößt den Lagerrücken der Lagerschale nicht, was je nach Herstellungsverfahren oder Einsatzgebiet des Lagers sinnvoll sein kann. Ferner ist ein Depot dieser Art auf einfache Weise herstellbar.

Vorzugsweise weist das Gleitlager einen Freilegungsbereich auf und ist das Depot im Bereich oder nahe des Freilegungsbereichs vorgesehen. Unter einem Freilegungsbereich versteht man einen Bereich an den Lagerenden einer Lagerschale, welche das Lager bilden, in dem die Wandstärke der Lagerschale im Vergleich zur Wandstärke der restlichen Lagerschale reduziert ist. Auf diese Weise kann der Verschleiß einer in der Lagerschale laufenden Welle aufgrund von Ungenauigkeiten an den Verbindungsstellen der beiden Lagerschalen verringert werden. Im Prinzip soll erreicht werden, dass das oder die Depot(s) möglichst nicht in der Hauptbelastungszone des Lagers vorgesehen sind, um die gefährlichen Fremdkörper in Depots im unbelasteten Bereich des Lagers zu fixieren. Ferner ist nahe des Freilegungsbereichs bzw. der Freilegungsbereiche der Austritt des Fremdkörpers aus der Ölaustrittsbohrung zu erwarten. Da die Depots vorzugsweise für größere Partikel vorgesehen sind, verschlechtert eine Anordnung der Depots in niedrig belasteten Bereichen des Lagers das Einlagerungsverhalten der Partikel in die Depots nicht.

Aus dem gleichen Grund ist das Depot vorzugsweise am Randbereich des Lagers, in axialer Richtung gesehen, vorgesehen, das heißt in der Nähe der Wellen eintretenden bzw. der Wellen austretenden Seite. Dies soll verhindern, dass die Fremdartikel in die stark belasteten Bereiche des Lagers gelangen.

Das Fassungsvermögen der Depots entspricht vorzugsweise dem mehrfachen Volumen auftretender Fremdkörper im Motor, das heißt Partikel bis einer Abmessung von beispielsweise etwa max. Länge x Breite x Höhe = 3 mm x 2 mm x 1 mm oder 2 mm x 2 mm x 2 mm oder mit einem Durchmesser von 2 mm.

Vorzugsweise wird hinsichtlich eines minimalen Herstellungsaufwands das Depot mittels Prägen, Bohren, Fräsen, Laserschneiden, ECM oder Stanzen eingebracht.

Vorzugsweise ist der Querschnitt des Depots senkrecht zur Erstreckungsrichtung des Depots zylindrisch, oval oder rechteckig, um eine lokale taschenförmige Aussparung einfach herzustellen.

Vorzugsweise ist in das Depot ein Füllmittel eingebracht, das weicher als das Material Lagers ist. In diesem Fall werden die Fremdkörper gegen Herausspülen besser fixiert. Zudem wird der hydrodynamische Schmierfilmaufbau durch Kanten nicht gestört, wenn das Filmmaterial mit der Depotfläche abschließt.

Vorzugsweise umfasst das weichere Material Elastomere, Polymere, Metalle, Legierungen und/oder einen Metallschaum.

Vorzugsweise sind mehrere Depots vorhanden, die mit den oben beschriebenen Eigenschaften ausgestattet sein können. Hierbei müssen nicht alle Depots die gleiche Ausgestaltung, Position, Größe usw. aufweisen, sondern können unterschiedlich sein und unterschiedliche Aufgaben bzw. Teilaufgaben erfüllen.

Die obige Aufgabe wird auch mit einer mindestens ein Depot aufweisenden Lagerschale gelöst. Hierbei können ein oder mehrere Depots in den oben beschriebenen Ausführungsvarianten vorgesehen sein. Vorzugsweise ist genau ein Depot in einer Lagerschale vorgesehen, um eine Übermäßige Reduzierung der Lauffläche zu vermeiden. Die Lagerstelle weist in diesem Fall genau zwei Depots auf.

KURZE BESCHREIBUNG DER ZEICHNUNGEN

Fig. 1    zeigt einen Querschnitt eines aus zwei Lagerschalen gebildeten Lagers mit darin eingebrachter Welle, wobei das Lager zwei Depots aufweist;

Fig. 2    zeigt einen Querschnitt gemäß der Fig. 1 mit kreiszylindrischem Depotquerschnitt;

Fig. 3    ist eine Ansicht gemäß der Fig. 1 mit ovalem Depotquerschnitt;

Fig. 4    ist eine Ansicht gemäß der Fig. 1 mit rechteckförmigem Depotquerschnitt;

Fig. 5 ist eine Ansicht gemäß der Fig. 1 mit Depottaschen;

Fig. 6 ist eine Ansicht gemäß der Fig. 1 mit Depottaschen, in die ein Füllmittel eingebracht ist;

Fig. 7 ist eine Ansicht gemäß der Fig. 1 mit durchgehenden Depots, wobei in ein Depot ein Füllmittel eingebracht ist.

WEGE ZUR AUSFÜHRUNG DER ERFINDUNG

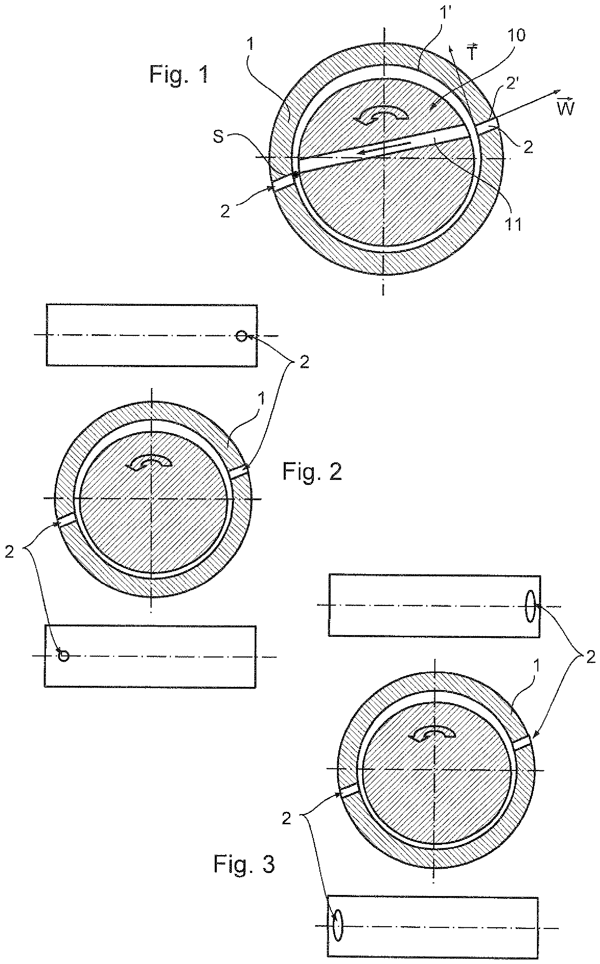

Fig. 1 ist ein Querschnitt eines aus zwei Lagerschalen 1 gebildeten Lagers. In das Lager ist eine Welle 10 eingebracht, die einen Ölkanal mit einer Ölaustrittsbohrung 11 aufweist. Die Drehrichtung der Welle 10 ist mit einem Pfeil im oberen Bereich der Welle angezeigt. Danach ergibt sich eine Hauptbelastungsrichtung, die mit einem Doppelpfeil eingezeichnet ist. Die Ölflussrichtung durch die Ölaustrittsbohrung ist ebenfalls eingezeichnet. Die Lagerschalen 1 weisen je eine Gleitfläche 1' auf. In den beiden Lagerschalen 1 sind je ein Depot 2 ausgebildet. Die Depots 2 sind von zylindrischer Gestalt und durchstoßen den Lagerrücken. Die Depots 2 sind zur Gleitfläche 1' offen.

Depots, die den Lagerrücken durchstoßen, sind nicht Teil der Erfindung, deren Beschreibung dient aber zum Verständnis der Erfindung.

Ein Schmutzpartikel ist mit dem Referenzzeichen S bezeichnet und befindet sich auf dem Weg in das Depot 2. Durch die Drehung der Welle wird das Teilchen in das Depot 2 gedrückt und dort fixiert. Die Einbringrichtung der Depots 2 in die Lagerschalen 1 in Richtung zum Lagerrücken ist so, dass, entsprechend der Drehrichtung, die gesammelten Fremdkörper nicht aus dem Depot 2 herausgespült werden können. Mit Bezug auf Fig. 1 bedeutet das, dass die beiden eingezeichneten Vektoren $\vec{W}$ und $\vec{T}$ einen spitzen Winkel bilden. Der Vektor $\vec{W}$ bezeichnet die Richtung der Depotwand 2' in der Erstreckungsrichtung des Depots und im Bereich des Schnittpunkts der Depotwand 2' mit der Gleitfläche 1'. Der Vektor $\vec{T}$ bezeichnet die Richtung entlang der Tangente der Depotfläche am Schnittpunkt der Depotwand der Depotfläche in Richtung vom Depot 2 weg.

Es sei bemerkt, dass in Fig. 1 lediglich ein möglicher Querschnitt des Systems aus Lager und Depot 2 gezeigt ist. Die obige Bedingung des Winkels der Vektoren $\vec{T}$ und $\vec{W}$ sollte zumindest für einen wesentlichen Teil der Depotwand in der axialen Richtung des Lagers erfüllt sein, so dass die Vermeidung des Herausspülens von Fremdpartikeln gewährleistet ist.

Die beiden Depots 2 sind in Fig. 1 im Bereich der Lagerschalenenden vorgesehen, in dem Freilegungsbereiche vorgesehen sein können, die in den Figuren aber nicht dargestellt sind. Ferner befinden sich die Depots im Bereich der Ölaustrittsbohrung 11 der Welle 10 (in axialer Richtung).

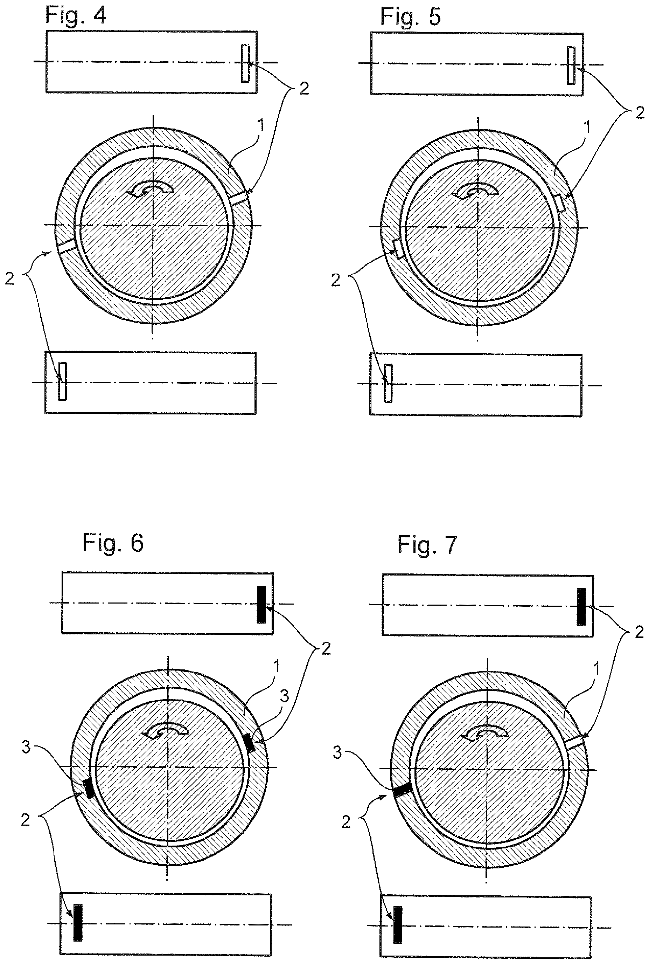

Die Figuren 2, 3 und 4 zeigen jeweils eine Ansicht gemäß der Fig. 1, wobei oberhalb und unterhalb des Lagers ein aufgerollter Querschnitt des Lagers dargestellt ist. Darin sind beispielhafte Querschnittsformen der Depots 2 in Richtung der Einbringrichtung der Depots 2 zu erkennen. In Fig. 2 ist ein kreisförmiger Querschnitt, in Fig. 3 ein ovaler Querschnitt und in Fig. 4 ein rechteckförmiger Querschnitt gezeigt. Es sei bemerkt, dass, wenn mehrere Depots 2 vorgesehen sind, die Depots 2 keinen einheitlichen Querschnitt aufweisen müssen. Die Depots 2 müssen ferner keine einheitlichen Querschnitte entlang der Einbringrichtung aufweisen, sondern können als unregelmäßig geformte Aussparungen, Sacklöcher, Durchgangsöffnungen usw. ausgebildet sein.

Fig. 5 ist eine Ansicht gemäß der Fig. 1, wobei die Depots 2 als taschenförmige Aussparungen ausgebildet sind, die den Lagerrücken nicht durchstoßen. Selbstverständlich können die Querschnitte unterschiedlich ausgebildet sein, wie es in den vorangegangen Ausführungsformen gezeigt ist.

Fig. 6 und Fig. 7 sind Ansichten gemäß der Fig. 1, wobei in einige der taschenförmigen Depots 2 und/oder Durchgangsöffnungen, die als Depots 2 fungieren, ein Füllmittel 3 bzw. Füllmaterial eingebracht ist. Das Füllmittel dient dazu, die Fixierung von eingefangenen Fremdpartikeln zu verbessern. Daher besteht das Füllmittel vorzugsweise aus einem weicheren Material als die Gleitfläche 1'.

**Patentansprüche**

1. Gleitlager aus zwei Lagerschalen (1), mit jeweils einer ein Depot (2), das zur Aufnahme von Fremdpartikeln geeignet ist, aufweisenden Depotfläche, die eine Gleitfläche (1') und/oder eine Oberfläche einer Ölversorgungsnut ist, wobei das Depot (2) eine Aussparung ist, die zur Depotfläche offen ist, eine Depotwand (2') aufweist und sich von der Depotfläche weg in das Lager erstreckt, wobei
die Depotwand (2') in der Erstreckungsrichtung (W) mit einer Bezugsrichtung einen spitzen Winkel bildet, wobei die Bezugsrichtung die Tangente (T) der Depotfläche am Schnittpunkt der Depotwand (2') mit der Depotfläche in Richtung vom Depot (2) weg ist, und das Depot (2) jeweils eine taschenförmige Aussparung ist, die den Lagerrücken der Lagerschale (1) nicht durchstößt.

2. Gleitlager nach Anspruch 1, **dadurch gekennzeichnet, dass** das Gleitlager einen Freilegungsbereich aufweist und das Depot (2) im Bereich des Freilegungsbereichs vorgesehen ist.

3. Gleitlager nach einem der vorhergehenden Ansprüche, **dadurch gekennzeichnet, dass** das Depot (2) am Randbereich des Lagers in axialer Richtung vorgesehen ist.

4. Gleitlager nach einem der vorhergehenden Ansprüche, **dadurch gekennzeichnet, dass** das Fassungsvermögen des Depots (2) einem mehrfachen des Volumens auftretender Fremdpartikel mit einer Abmessung von maximal etwa Länge x Breite x Höhe = 3 mm x 2 mm x 1mm oder 2 mm x 2mm x 2mm oder einem Durchmesser von 2 mm entspricht.

5. Gleitlager nach einem der vorhergehenden Ansprüche, **dadurch gekennzeichnet, dass** das Depot (2) mittels Prägen, Bohren, Fräsen, Laserschneiden, ECM oder Stanzen gefertigt ist.

6. Gleitlager nach einem der vorhergehenden Ansprüche, **dadurch gekennzeichnet, dass** der Querschnitt des Depots (2) senkrecht zur Erstreckungsrichtung des Depots (2) zylindrisch, oval oder rechteckförmig ist.

7. Gleitlager nach einem der vorhergehenden Ansprüche, **dadurch gekennzeichnet, dass** in das Depot (2) ein Füllmittel (3) eingebracht ist, das weicher als das Material Lagers ist.

8. Gleitlager nach Anspruch 7, **dadurch gekennzeichnet, dass** das Füllmittel (3) ein Elastomer, ein Polymer, ein Metall, eine Legierung oder ein Metallschaum ist.

9. Gleitlager nach einem der vorhergehenden Ansprüche, **dadurch gekennzeichnet, dass** mehrere Depots (2) vorgesehen sind.

**Claims**

1. Plain bearing consisting of two bearing shells (1), each with a repository surface which has a repository (2) suitable for holding foreign particles and which is a sliding surface (1') and/or a surface of an oil supply groove, wherein the repository (2) is a recess which opens towards the repository surface, has a repository wall (2') and extends away from the repository surface into the bearing, wherein

the repository wall (2') in the direction (W) in which it extends forms an acute angle with a reference direction, wherein the reference direction is the tangent (T) to the repository surface at the point of intersection of the repository wall (2') with the repository surface in the direction away from the repository (2), and the repository (2) is in each case a pocket-like recess which does not penetrate the back of the bearing shell (1).

2. Plain bearing according to claim 1, **characterised in that** the plain bearing has an exposed region and the repository (2) is provided in the region of the exposed region.

3. Plain bearing according to any of the preceding claims, **characterised in that** the repository (2) is provided in the edge region of the bearing in the axial direction.

4. Plain bearing according to any of the preceding claims, **characterised in that** the capacity of the repository (2) corresponds to a multiple of the volume of foreign particles arising, with dimensions of maximum approximate length x width x height = 3 mm x 2 mm x 1 mm or 2 mm x 2 mm x 2 mm or a diameter of 2 mm.

5. Plain bearing according to any of the preceding claims, **characterised in that** the repository (2) is made by stamping, drilling, milling, laser cutting, ECM or punching.

6. Plain bearing according to any of the preceding claims, **characterised in that** the cross-section of the repository (2) is cylindrical, oval or rectangular perpendicularly to the direction in which the repository (2) extends.

7. Plain bearing according to any of the preceding claims, **characterised in that** a filler (3) which is softer than the material of the bearing is introduced into the repository (2).

8. Plain bearing according to claim 7, **characterised in that** the filler (3) is an elastomer, a polymer, a metal, an alloy or a metal foam.

9. Plain bearing according to any of the preceding claims, **characterised in that** a plurality of repositories (2) are provided.

**Revendications**

1. Palier à glissement constitué de deux coquilles de coussinet (1), avec à chaque fois une surface de dépôt qui est une surface de glissement (1') et/ou une surface d'une rainure d'alimentation en huile, présentant un dépôt (2) destiné à recevoir des particules étrangères, dans lequel le dépôt (2) est un évidement qui est ouvert vers la surface de dépôt, qui comporte une paroi de dépôt (2') et qui s'étend dans le palier en s'éloignant de la surface de dépôt, dans lequel la paroi de dépôt (2') forme un angle aigu avec une direction de référence dans la direction d'extension (W), dans lequel la direction de référence est la tangente (T) de la surface de dépôt au niveau de l'intersection de la paroi de dépôt (2') avec la surface de dépôt dans la direction s'éloignant du dépôt (2) et le dépôt (2) est à chaque fois un évidement en forme de poche qui ne transperce pas le dos de palier de la coquille de coussinet (1).

2. Palier à glissement selon la revendication 1, **caractérisé en ce que** le palier à glissement comporte une zone de dégagement et le dépôt (2) est prévu dans la zone de la zone de dégagement.

3. Palier à glissement selon l'une des revendications précédentes, **caractérisé en ce que** le dépôt (2) est prévu au niveau de la zone de bord du palier dans la direction axiale.

4. Palier à glissement selon l'une des revendications précédentes, **caractérisé en ce que** la contenance du dépôt (2) correspond à un multiple du volume de particules étrangères apparaissant, avec une dimension maximale d'environ longueur x largeur x hauteur = 3 mm x 2 mm x 1 mm ou 2 mm x 2 mm x 2 mm ou un diamètre de 2 mm.

5. Palier à glissement selon l'une des revendications précédentes, **caractérisé en ce que** le dépôt (2) est fabriqué par estampage, forage, fraisage, découpe au laser, traitement électrochimique ou poinçonnage.

6. Palier à glissement selon l'une des revendications précédentes, **caractérisé en ce que** la section transversale du dépôt (2) perpendiculairement à la direction d'extension du dépôt (2) est cylindrique, ovale ou rectangulaire.

7. Palier à glissement selon l'une des revendications précédentes, **caractérisé en ce qu'**une matière de remplissage (3) qui est plus molle que la matière du palier est placée dans le dépôt (2).

8. Palier à glissement selon la revendication 7, **caractérisé en ce que** la matière de remplissage (3) est un élastomère, un polymère, un métal, un alliage ou une mousse métallique.

9. Palier à glissement selon l'une des revendications précédentes, **caractérisé en ce que** plusieurs dépôts (2) sont prévus.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3905450 C2
- GB 1128370 A
- GB 1144131 A
- DE 102005037502 A1